Europäisches Patentamt

European Patent Office

Office européen des brevets

(11) Veröffentlichungsnummer: **0 334 153 B1**

# (12) EUROPÄISCHE PATENTSCHRIFT

(45) Veröffentlichungstag der Patentschrift: **11.11.92**

(21) Anmeldenummer: **89104404.2**

(22) Anmeldetag: **13.03.89**

(51) Int. Cl.⁵: **G05D 17/02**, G05D 3/14

(54) **Elektrischer Stellantrieb.**

(30) Priorität: **25.03.88 DE 3810208**

(43) Veröffentlichungstag der Anmeldung:
**27.09.89 Patentblatt 89/39**

(45) Bekanntmachung des Hinweises auf die
Patenterteilung:
**11.11.92 Patentblatt 92/46**

(84) Benannte Vertragsstaaten:
**AT DE ES GB IT NL SE**

(56) Entgegenhaltungen:
**EP-A- 0 195 278**
**DE-A- 2 742 079**
**DE-A- 3 233 874**
**DE-A- 3 509 552**
**US-A- 3 732 478**

(73) Patentinhaber: **SIEMENS AKTIENGESELL-
SCHAFT**
**Wittelsbacherplatz 2**
**W-8000 München 2(DE)**

(72) Erfinder: **Kugler, Robert, Dr.**
**Kellerstrasse 40**
**W-8508 Wendelstein(DE)**

EP 0 334 153 B1

## Beschreibung

Die Erfindung betrifft einen elektrischen Stellantrieb mit einer Schalt- und Meldeeinrichtung, die ein Stellwegerfassungsgerät sowie ein Drehmomenterfassungsgerät aufweist.

Ein solcher Stellantrieb weist ein Untersetzungsgetriebe zwischen dem Elektromotor und einem Stellglied auf und erfaßt den Stellweg mit einem Wegerfassungsgerät mit Meldegetriebe. Das Drehmomenterfassungsgerät wird von einem Drehmomentsensor beeinflußt, der mit der Abtriebswelle für das Stellglied gekoppelt ist.

Aus der DE-A1-35 09 552 (bzw. korrespondierende EP-A1-0 195 278) sind ferromagnetische Folien aus amorphem Werkstoff für Drehmomentsensoren bekannt.

Der Erfindung liegt der Gedanke zugrunde, bei bereits vorhandenen vieladrigen Signalleitungen von elektronischen Automatisierungseinrichtungen diese Signalleitungen zur Stromversorgung einer elektronischen Schalt- und Meldeeinrichtung unter Verwendung von stromgespeisten Drehmomentsensoren der genannten Art mitzubenutzen. Es hat sich aber gezeigt, daß die über die Signalleitungen übertragbaren Ströme bei der zur Verfügung stehenden Spannung (24 V) für den Energiebedarf des an einen solchen Drehmomentsensor angepaßten elektronischen Drehmomenterfassungsgerätes und des Drehmomentsensors nicht ausreichen, jedoch für die Energieversorgung des elektronischen Wegerfassungsgerätes und der Auswerteschaltung genügend groß sind.

Solche Drehmomentsensoren mit wechselstromerregten ferromagnetischen Folien haben bei 24 V Versorgungsspannung einen Strombedarf von etwa 300 mA, dem ein weitaus geringerer übertragbarer Wert von höchstens etwa 100 mA über die Signalleitungen gegenübersteht.

Der Erfindung liegt die Aufgabe zugrunde, unter Mitbenutzung der Signalleitungen und ohne zusätzliche Fernenergieübertragungswege mit einfachen Mitteln die notwendige Stromversorgung der elektronischen Schalt- und Meldeeinrichtung bei Fehlen einer Energieversorgung vor Ort sicherzustellen.

Die Lösung der gestellten Aufgabe gelingt durch die kennzeichnenden Merkmale des Patentanspruchs.

Es wird dabei von der Tatsache ausgegangen, daß die Erfassung des Drehmomentes nur bei laufendem Elektromotor erforderlich ist, wobei eine ausreichende geringe Totzeit bis zur Vollaktivierung des Drehmomenterfassungssystems (Drehmomentsensor und Drehmomenterfassunggerät) zu berücksichtigen ist.

Zwei schematische Schaltungsbeispiele für die Energieversorgung von Stellantrieben der eingangs genannten Art sind nachfolgend erläutert, wobei

FIG 1 einen stark vereinfachten, nicht drehrichtungsumschaltbaren Stellantrieb und

FIG 2 einen drehrichtungsumschaltbaren Stellantrieb mit Vorortsteuerung zeigt.

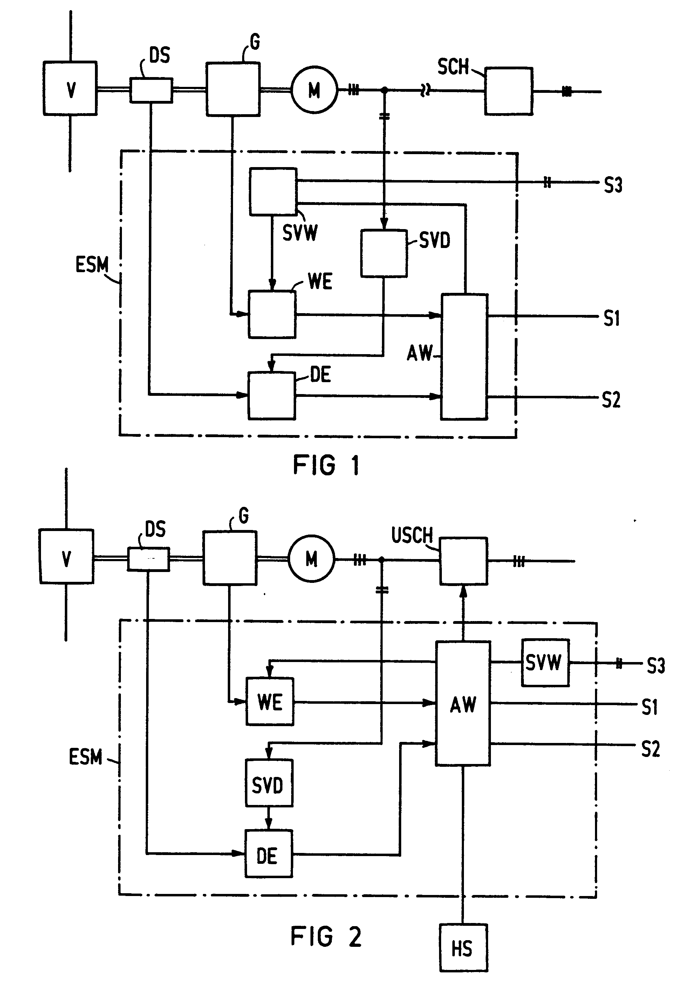

Gemäß FIG 1 ist ein Stellglied V über ein Getriebe G mechanisch mit einem Elektromotor M gekuppelt, der über einen Motorschalter SCH in einer Schaltwarte an ein Drehstromnetz anschaltbar ist. Auf der Welle zwischen Getriebe G und Stellglied V ist ein ferromagnetischer, wechselstromerregter Drehmomentsensor DS in Folienform aufgeklebt und elektrisch mit einem elektronischen Drehmomenterfassungsgerät DE verbunden. Ebenso ist ein elektronisches Wegerfassungsgerät WE elektrisch mit einem im Getriebe G angeordneten Geber verbunden. Die Überwachungs- und Schaltsignale der beiden Geräte WE und DE sind mit einer Auswerteschaltung AW verbunden und über die Signalleitungen S1,S2 für nicht gezeigte Automatisierungseinrichtungen mit einer entfernten Steuerzentrale verbunden zu denken. Die Energieversorgung für das Wegerfassungsgerät WE und die Auswerteschaltung AW erfolgt entweder über eine an eine Ader S3 oder die Signalleitung S1 und/oder S2 ständig angeschlossene Energieversorgungseinrichtung SVW. Die Energieversorgung für das Drehmomenterfassungsgerät DE wird über eine gesonderte Energieversorgungseinrichtung SVD aus dem Motoranschlußkreis nur bei eingeschaltetem Schalter SCH aktiviert.

Die Schaltungsteile DE,WE,AW,SVW und SVD bilden die Schalt- und Meldeeinrichtung ESM.

Gemäß FIG 2 kann die Schaltung für beide Drehrichtungen des Elektromotors M vor Ort durch einen üblichen Umschalter USCH in Verbindung mit der Auswerteschaltung AW und einen von Hand betätigbaren Vorortschalter HS erfolgen.

## Patentansprüche

1. Elektrischer Stellantrieb mit einer Schalt- und Meldeeinrichtung, die ein Wegerfassungsgerät sowie ein Drehmomenterfassungsgerät aufweist,

   **dadurch gekennzeichnet,**

   daß eine elektronische Schalt- und Meldeeinrichtung (ESM) mit einem elektronischen Wegerfassungsgerat (WE) und einem von einem Drehmomentsensor (DS) gesteuerten elektronischen Drehmomenterfassungsgerät (DE) und gesonderten Energieversorgungseinrichtungen (SVD;SVW) vorgesehen ist, und daß die Energieversorgungseinrichtung (SVW) für das Wegerfassungsgerät (WE) und eine Auswerteschaltung (AW) über eine Signalleitung (S) einer elektronischen Automatisierungseinrichtung das Wegerfassungsgerät (WE) und die Auswerteschaltung (AW) ständig mit Betriebsspannung versorgt, dagegen die Energieversorgungseinrichtung (SVD) für das Drehmomenterfassungsgerät (DE) in Betriebsabhängigkeit vom Stellmotor (M) für den Stellantrieb steht, so daß nur bei eingeschaltetem Stellmotor (M) das Drehmomenterfassungsgerät (DE) aktiviert ist.

## Claims

1.  An electric actuator with a switching and signalling device, having position detection apparatus and torque detection apparatus, characterized in that there is provided an electronic switching and signalling device (ESM) having an electronic position detection apparatus (WE), an electronic torque detection apparatus (DE), controlled by a torque sensor (DS), and isolated energy-supply devices (SVD;SVW), and in that the energy-supply device (SVW) for the position detection apparatus (WE) and an evaluation circuit (AW) constantly supplies, by way of a signal line (S) of an electronic automation device, the position detection apparatus (WE) and the evaluation circuit (AW) with an operational voltage, whereas the energy-supply device (SVD) for the torque detection apparatus (DE) is operationally dependent on the positioning motor (M) for the actuator, so that the torque detection apparatus (DE) is only activated with an operating positioning motor (M).

## Revendications

1.  Dispositif électrique à servo-entrainement comportant un dispositif de commutation et de signalisation, qui possède un appareil de détection de la course ainsi qu'un appareil de détection du couple, caractérisé par le fait qu'il est prévu un dispositif électronique de commutation et de signalisation (ESM) possédant un appareil électronique de détection de la distance (WE) et un appareil électronique de détection du couple (DE), commandé par un capteur de couple (DS), et des dispositifs particuliers d'alimentation en énergie (SVD; SVW), et que le dispositif d'alimentation en énergie (SVW) pour l'appareil de détection de la course (WE) et un circuit d'évaluation (AW) alimente en permanence, par l'intermédiaire d'une ligne de transmission de signaux (S) d'un dispositif électronique d'automatisation, l'appareil de détection de la course (WE) et le circuit d'évaluation (W) avec une tension d'alimentation, tandis que le dispositif d'alimentation en énergie (SVD) pour l'appareil de détection du couple (DE), dépend, du point de vue fonctionnement, du servomoteur (M) pour le dispositif à servo-entraînement, de sorte que l'appareil de détection du couple (DE) est activé uniquement lorsque le servomoteur (M) est enclenché.

FIG 1

FIG 2